Europäisches Patentamt

European Patent Office

Office européen des brevets

(11) Veröffentlichungsnummer: **0 330 161 B1**

## (12) EUROPÄISCHE PATENTSCHRIFT

(45) Veröffentlichungstag der Patentschrift: **11.11.92**

(21) Anmeldenummer: **89103049.6**

(22) Anmeldetag: **22.02.89**

(51) Int. Cl.⁵: **B01D 39/20**, F01N 3/02, C04B 38/06

(54) **Verfahren zur Herstellung eines Russpartikelfilters.**

(30) Priorität: **26.02.88 DE 3806131**

(43) Veröffentlichungstag der Anmeldung:
**30.08.89 Patentblatt 89/35**

(45) Bekanntmachung des Hinweises auf die
Patenterteilung:
**11.11.92 Patentblatt 92/46**

(84) Benannte Vertragsstaaten:
**CH DE FR GB IT LI NL SE**

(56) Entgegenhaltungen:
**DE-A- 3 522 287       DE-C- 12 943
DE-C- 3 444 472       US-A- 4 264 346
US-A- 4 390 355       US-A- 4 652 286**

(73) Patentinhaber: **Daimler-Benz Aktiengesellschaft
Postfach 600202 Mercedesstrasse 136
W-7000 Stuttgart 60(DE)**

Patentinhaber: **Griebling, Gerhard
Hahnenweg 14
W-5431 Mogendorf(DE)**

(72) Erfinder: **Bandel, Wolfgang
Jahnstrasse 72
W-7022 Leinfelden-Echterdingen/Stetten(DE)**
Erfinder: **Daudel, Helmut
Krebsgässle 14
W-7060 Schorndorf(DE)**
Erfinder: **Griebling, Gerhard
Hahnenweg 14
W-5431 Mogendorf(DE)**
Erfinder: **Normann, Alfred
Gartenstrasse 9a
W-5411 Alsbach(DE)**
Erfinder: **Sperling, Friedrich, Dr.
Marsstrasse 21
W-5430 Montabaur(DE)**

## Beschreibung

Die Erfindung betrifft ein Verfahren zur Herstellung eines Rußpartikelfilters gemäß Oberbegriff des Anspruches 1.

Aus der DE-C-34 44 472 ist ein Rußpartikelfilter bekannt, dessen aus einem porösen Keramikwerkstoff bestehender Rußfilterkörper von einer Vielzahl von parallel zur Abgasströmungsrichtung verlaufenden Kanälen durchsetzt ist, welche abwechselnd jeweils am stromaufwärtigen oder stromabwärtigen Ende mittels je eines eingebrachten Stopfens verschlossen sind. Dieses wechselseitige Verschließen der Kanäle erfolgt jedoch erst am schon fertigen Rußfilterkörper und verursacht daher einen relativ großen Fertigungsaufwand.

Aus der US-A-4 652 286 ist es ferner bekannt, einen Rußfilterkörper durch Schichten oder Wickeln eines keramischen Werkstoffes herzustellen. Jedoch auch in diesem Fall ist das wechselseitige Verschließen der Kanäle relativ aufwendig.

Der Erfindung liegt daher die Aufgabe zugrunde, ein Verfahren zur Herstellung eines Rußpartikelfilters der im Oberbegriff des Hauptanspruches beschriebenen Art aufzuzeigen, mit Hilfe dessen ein aufwendiges wechselseitiges Verschließen der einzelnen Kanäle entfällt.

Die Aufgabe wird erfindungsgemäß durch die Merkmale des kennzeichnenden Teiles des Anspruches 1,2 oder 9 gelöst.

Bei dem erfindungsgemäßen Herstellungsverfahren ist die spätere Lage der Kanäle schon durch die Anordnung der Längsfäden des von der schlickerförmigen keramischen Ausgangsmasse bestrichenen Gewebes festgelegt. Diese Längsfäden sind dabei bezüglich der Abgasströmungsrichtung jeweils versetzt zueinander angeordnet, so daß nach dem anschließenden Aufeinanderschichten bzw. Aufrollen des von der schlickerförmigen keramischen Ausgangsmasse bestrichenen Gewebes ein Rußfilterkörper vorliegt, in dem sich ausgehend vom jeweils stromauf- oder stromabwärtigen Ende Längsfäden erstrecken, die nicht ganz bis an das jeweils gegenüberliegende Ende des Rußfilterkörpers reichen. Während des folgenden, zur Aushärtung des Rußfilterkörpers dienenden Brennvorganges kommt es nun infolge einer nur geringen Temperaturfestigkeit der Längsfäden zu einem Abbrennen derselben, so daß dabei ein aus einem porösen Kermaikwerkstoff bestehender Rußfilterkörper mit den gewünschten wechselseitig verschlossenen Kanälen entsteht. Ein nachträgliches und aufwendiges Verschließen einzelner Kanäle entfällt damit. Dabei die Längsfäden über Querfäden miteinander zu verbinden, die aus einem Werkstoff bestehen, dessen Abbrenntemperatur über der Brenntemperatur des Rußfilterkörpers liegt, hat den Vorteil, daß während des Schichtvorganges des bestrichenen Gewebes immer ein Mindestabstand zwischen den einzelnen Längsfäden gewährleistet bleibt und damit nach dem Ausbrennen dieser Längsfäden eine Kurzschlußbildung, d. h. also eine Verbindung eines nach der stromaufliegenden Seite hin offenen Kanals mit einem nach der stromabliegenden Seite hin offenen Kanal ausgeschlossen ist.

Ganze, mit der schlickerförmigen keramischen Ausgangsmasse bestrichene Gewebelangen in Abgasströmungsrichtung versetzt zueinander anzuordnen und anschließend zu schichten, hat den Vorteil, daß sowohl die Längs- als auch die Querfäden aus ein- und demselben Werkstoff mit einer nur geringen Temperaturfestigkeit bestehen können. Derartige aus einem Material bestehende Gewebelagen bzw. Gewebematten sind relativ kostengünstig. Die Querfäden werden dabei mit ausgebrannt, was jedooch in diesem Fall ohne Bedeutung ist, denn zwischen den einzelnen Gewebelagen, die versetzt zueinander angeordnet sind, besteht keinerlei Verbindung durch irgendwelche Querfäden. Die Querfäden verbinden in diesem Fall jeweils immer nur solche Längsfäden, die mit ein- und demselben Ende des Rußfilterkörpers verbunden sind.

Die Längs- und gegebenenfalls die Querfäden mit einer aufgerauhten Oberfläche zu versehen, führt dazu, daß die einzelnen Kanäle nach dem Ausbrennen der Fäden ebenfalls eine vergrößerte Oberfläche besitzen und demzufolge ein verbesserter Gasübertritt über das poröse Keramikmaterial gegeben ist. Darüber hinaus wird durch eine vergrößerte Kanaloberfläche eine Erhöhung der Rußpartikelspeicherkapazität erzielt.

Eine zusätzliche Reduzierung des Schadstoffgehaltes im Abgas, insbesondere der Kohlenwasserstoff-, der Stickoxid- und der Kohlenmonoxidanteile wird erreicht, wenn die Längsfäden katalytisch beschichtet werden. Im Gegensatz zu einem konventionellen Herstellungsverfahren des Rußfilterkörpers durch Strangpressen hat das erfindungsgemäße Verfahren der Vorteil, daß beliebige "schlickerfähige" Werkstoffe verwendet werden können, wie z. B. Aluminiumoxid oder Aluminiumtitanat.

Weitere vorteilhafte Ausgestaltungen der Erfindung sind den übrigen Unteransprüchen zu entnehmen.

In der Zeichnung ist die Erfindung anhand mehrerer Ausführungsbeispiele dargestellt. Im einzelnen zeigt:

Figur 1
eine Teil einer Abgasleitung mit einem erfindungsgemäß hergestellten Rußfilterkörper in einer quergeschnittenen Darstellung,

Figur 2
die Herstellung eines Rußfilterkörpers gemäß dem erfindungsgemäßen Verfahren in einer perspektivischen Darstellung,

Figur 3

die Herstellung eines Rußfilterkörpers nach einer weiteren Variante des erfindungsgemäßen Verfahrens in einer perspektivischen Darstellung,

Figur 4 und 5

zwei vorteilhafte Ausgestaltungsmöglichkeiten einer Gewebelage,

Figuren 6a und 6b

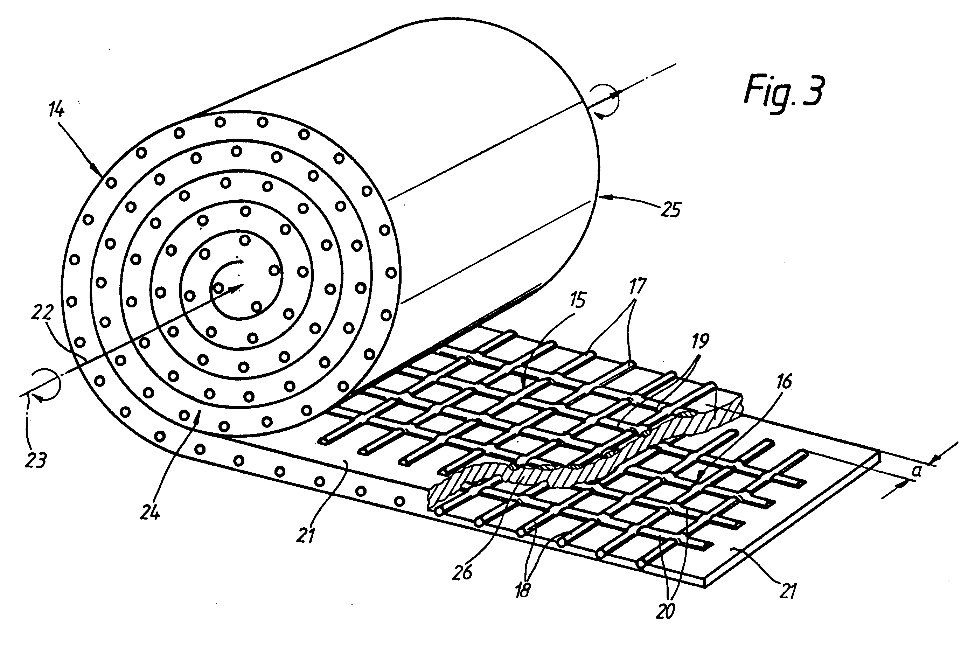

eine vorteilhafte Variante des in Fig. 3 aufgezeigten Herstellungsverfahrens,

Figuren 7a und 7b

eine weitere vorteilhafte Variante des in Fig. 3 aufgezeigten Herstellungsverfahrens,

Figuren 8a und 8b

eine weitere vorteilhafte Variante des in Fig. 3 aufgezeigten Herstellungsverfahrens und

Figur 9

die Herstellung eines Rußfilterkörpers nach einer weiteren Variante des erfindungsgemäßen Verfahrens .

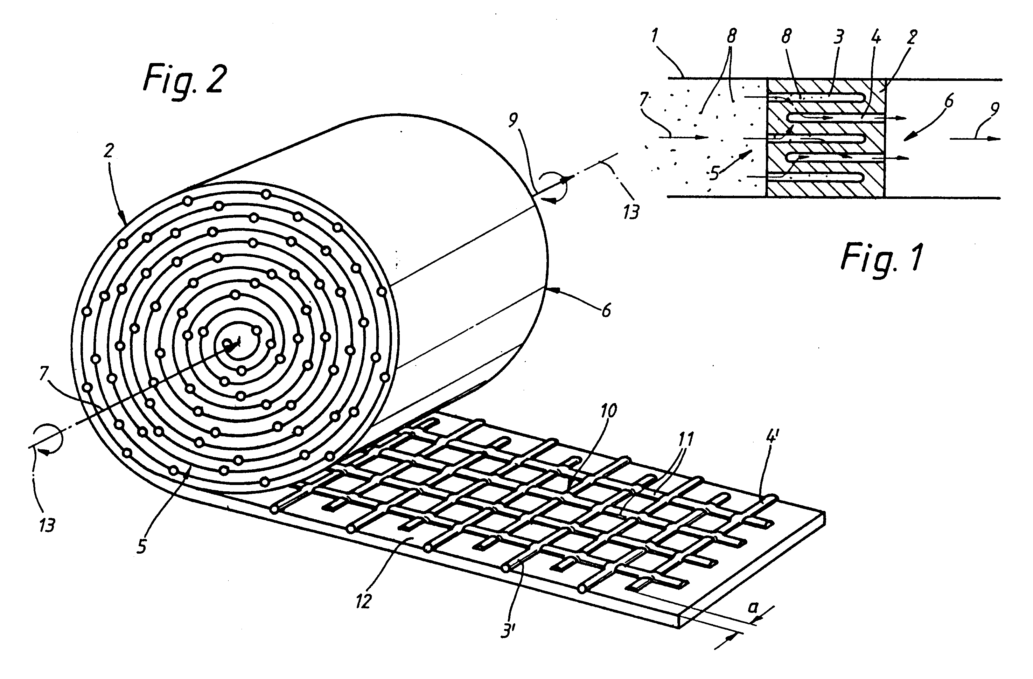

Figur 1 zeigt einen Teil einer Abgasleitung 1 einer nicht dargestellten Dieselbrennkraftmaschine, in welcher ein aus einem porösen Keramikwerkstoff bestehender zylindrischer Rußfilterkörper 2 eingesetzt ist, der eine Vielzahl von Längskanälen 3 und 4 aufweist, die abwechselnd jeweils am stromaufwärtigen Ende 5 oder am stromabwärtigen Ende 6 verschlossen sind. Das in Richtung des Pfeiles 7 strömende, die Rußpartikel 8 mitführende Abgas tritt über die zu der stromauf liegenden Seite 5 hin offenen Längskanäle 3 in den Rußfilterkörper 2 ein und wird durch den Verschluß dieser Kanäle gezwungen, über die poröse Kanalwandung durch das poröse Keramikmaterial des Rußfilterkörpers 2 hindurch in die zu der stromab liegenden Seite 6 hin offenen Längskanäle 4 abzufließen. Die Rußpartikel 8 werden jedoch aufgrund ihres zu großen Durchmessers in den zu der stromauf liegenden Seite 5 hin offenen Längskanälen 3 zurückgehalten und von Zeit zu Zeit mit Hilfe eines in der Zeichnung nicht dargestellten Brenners oder dergleichen abgebrannt. Das den Rußfilterkörper 2 verlassende Abgas (Pfeil 9) ist somit rußpartikelfrei.

Die Herstellung des Rußfilterkörpers 2 erfolgt in erfindungsgemäßer Weise derart (Figur 2), daß zunächst ein Geflecht 10 aus parallel zueinander verlaufenden Längsfäden $3'$ und $4'$ und diese auf Abstand haltenden Querfäden 11 mit einer schlickerförmigen keramischen Ausgangsmasse 12 bestrichen wird. Die Längsfäden $3'$ und $4'$ sind dabei in Strömungsrichtung der Abgase (Pfeile 7 und 9) um den Abstand a versetzt zueinander angeordnet. Dieses bestrichene Gewebe wird nun um die durch die Abgasströmungsrichtung vorgegebene Achse 13 aufgewickelt, wodurch der Rußfilterkörper 2 eine zylindrische Form erhält. Nach dem Versteifen und Trocknen des Rußfilterkörpers 2 wird dieser in einem weiteren Arbeitsschritt gebrannt. Dabei erhält er seine Porösität und Festigkeit. Die Längsfäden $3'$ und $4'$ bestehen nun aus einem Material, dessen Abbrenntemperatur unterhalb der Brenntemperatur des Keramikmaterials des Rußfilterkörpers 2 liegt. Die Abbrenntemperatur des Querfadenmaterials 11 dagegen liegt oberhalb dieser Brenntemperatur. Während des Brennvorganges kommt es damit zum Abbrand der Längsfäden $3'$ und $4'$, wodurch sich die Längskanäle 3 und 4 in der in Figur 1 beschriebenen Anordnung herausbilden. Da die Querfäden 11 aus einem temperaturbeständigen Material bestehen, verbleiben diese in dem Rußfilterkörper und verhindern damit einen Kurzschluß zweier Längsfäden $3'$ und $4'$.

Die Oberfläche der Längsfäden $3'$ und $4'$ ist, um einen verbesserten Gasübertritt in den Rußfilterkörper 2 und eine erhöhte Rußpartikelspeicherkapazität zu erreichen, aufgerauht. Darüberhinaus können die Längsfäden $3'$ und $4'$ mit einer katalytischen Beschichtung versehen werden.

In Figur 3 ist eine weitere Möglichkeit zur Herstellung eines Rußfilterkörpers 14 in erfindungsgemäßer Weise aufgezeigt. Zwei Gewebelagen 15 und 16, von denen jede ein Geflecht aus parallelen, nicht längsversetzten Längs- 17 bzw. 18 und parallelen Querfäden 19 bzw. 20 ist, werden beide in der gezeigten Weise mit einer schlickerförmigen keramischen Ausgangsmasse 21 bestrichen. Die beiden Gewebelagen 15 und 16 selbst sind dabei in Abgasströmungsrichtung (Pfeil 22) um den Abstand a versetzt zueinander angeordnet. Beide Gewebelagen 15 und 16, in diesem Fall also sowohl die Längs- 17 bzw. 18 als auch die Querfäden 19 bzw. 20, bestehen aus einem Material, dessen Abbrenntemperatur unterhalb der zur Aushärtung des Keramikwerkstoffes 21 erforderlichen Brenntemperatur liegt. Die beiden bestrichenen Gewebelagen 15 und 16 werden in einem nachfolgenden Arbeitsgang in der in Figur 3 gezeigten Weise um die durch die Abgasströmungsrichtung gegebene Längsachse 23 zu einem zylindrischen Rußfilterkörper 14 aufgewickelt.

Wiederum nach dem Versteifen und Trocknen wird dieser Rußfilterkörper 14 gebrannt, wobei beide Gewebelagen 15 und 16 vollständig ausbrennen. Durch den Brennvorgang entsteht damit ein poröser Rußfilterkörper 14 mit zwei Kanalnetzen, von denen das eine über die aus den Längsfäden 18 gebildeten Längskanäle nur zu der stromaufliegenden Seite 24 hin offen ist und das andere über die aus den Längsfäden 17 gebildeten Längskanälen zu der stromab liegenden Seite 25 hin offen ist. Das in die Längskanäle und in diesem Ausführungsbeispiel von den Längskanälen auch in die durch die Querfäden 19 bzw. 20 gebildeten Querkanäle einströmende, die Rußpartikel mitführende Abgas muß damit, um in das auslaßseitige Kanalnetz gelangen zu können, durch die zwischen beiden Kanalnetzen liegende poröse Keramikschicht 26 hindurchströmen. Dabei werden die mitgeführten Rußpartikel in dem aus dem Geflecht 16 gebildeten Kanalnetz zurückgehalten, wo sie von Zeit zu Zeit mit Hilfe eines nicht dargestellten Brenners oder der gleichen abgebrannt werden. Es ist selbstverständlich auch möglich, Querfäden aus einem temperaturbeständigen Material zu verwenden. Auch bei diesem Ausführungsbeispiel sind die Gewebefäden einschließlich der Querfäden mit einer aufgerauhten Oberfläche versehen. Eine katalytische Beschichtung ist ebenso möglich. Anstelle der Gewebelagen 15 und 16 kann auch je ein ausbrennbares Vlies verwendet werden, welches mehrere Bohrungen aufweist, durch welche die schlickerförmige Ausgangsmasse hindurchtritt, jeweils immer zwei Keramikschichten miteinander verbindet und somit eine Abstützung der in diesem Fall ringförmig ausgebildeten Kanäle gegeben ist.

Beim Wickeln oder Schichten des bestrichenen Gewebes können die zur einen oder anderen Stirnseite des Rußfilterkörpers 2 bzw. 14 versetzten Längsfäden $3'$, $4'$ bzw. Gewebelagen 15 und 16 von der keramischen Ausgangsmasse umhüllt sein, so daß die mit dem Brennen des Filterkörpers 2 bzw. 14 entstehenden Längskanäle verschlossen bleiben. Um dies zu verhindern, werden nach dem Brennen schmale Scheiben von beiden stirnseitigen Enden 5 bzw. 24 und 6 bzw. 25 des Filterkörpers 2 bzw. 14 abgesägt. Dabei ist nur darauf zu achten, daß nicht so viel Material abgenommen wird, daß ein Längsfaden $3'$ oder $4'$ bzw. eine Gewebelage 15 oder 16 beide Seitenflächen 5 und 6 bzw. 24 und 25 des Rußfilterkörpers direkt miteinander verbindet.
Als schlickerförmige keramische Ausgangsmasse 12 bzw. 21 wird Aluminiumtitanat mit Wasser verwendet. Zur Verbesserung der Formbarkeit der Ausgangsmasse ist dieser noch ein organisches Bindemittel beigefügt. Nach dem Brennvorgang liegt die Mikroporösität des Keramikmaterials unterhalb von 1 μm. Durch Zugabe eines entsprechenden ausbrennbaren Polvers (Körnung < 1 μm) besteht eine zusätzliche Möglichkeit der Einflußnahme auf die Porösität. Es können auch andere zur Herstellung von Rußfiltern geeignete Werkstoffe verwendet werden (z. B. Cordierit, Aluminiumoxid ($Al_2O_3$).Die ausbrennbaren Gewebefäden $3'$, $4'$ bzw. 15, 16 bestehen aus Chemiefasern, wobei ebenso der Einsatz organischer Fasern denkbar wäre.
In weiterer Ausgestaltung der Erfindung ist es selbstverständlich auch möglich, den Rußfilterkörper 2 bzw. 14 anstelle durch Wickeln, diesen durch einfaches Aufeinanderschichten mehrerer bestrichener Einzellagen herzustellen. Auch sind andere Wickelformen als zylindrische denkbar (z. B. elliptische oder dreieckförmige Grundflächen).

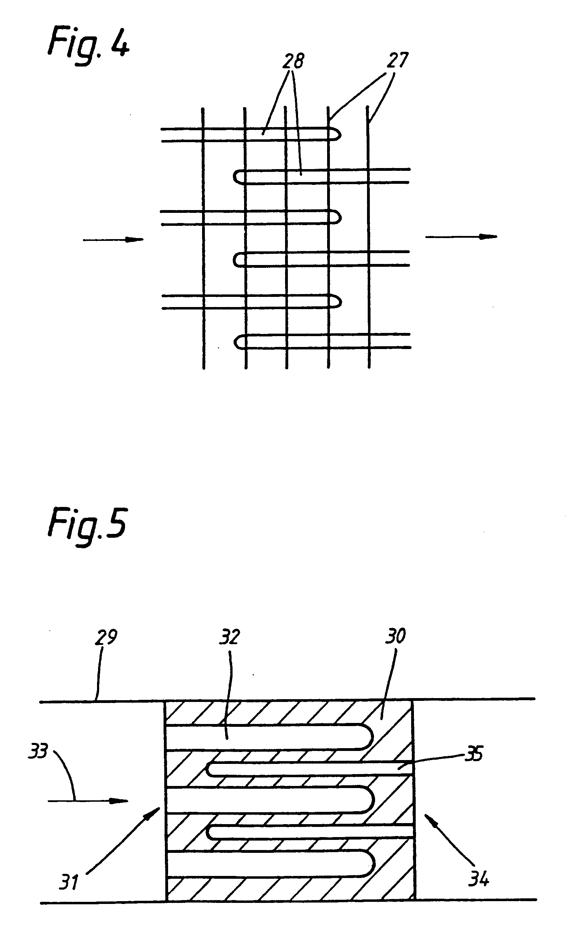

Um während des Aufwickelns bzw. während des Schichtens die Längsfäden auf Abstand halten zu können, ist es anstelle der Verwendung von Querfäden auch denkbar, die Längsfäden auf einer dünnen Folie zu befestigen, die sich nach Erfüllung ihrer Aufgabe in der Feuchtigkeit der schlickerförmigen keramischen Ausgangsmasse rückstandslos auflöst. Hilfsfäden an beiden Seiten der Wickelfolie aus sehr belastbarem Material, z. B. Kunststofffäden, sind dabei zur Übertragung der Wickelkräfte notwendig. Diese Hilfsfäden liegen jedoch in einem Bereich des Rußfilterwickelkörpers, der später zum Erhalt zweier planer Seitenflächen ohnehin abgetrennt wird. Anstelle von Querfäden können zur Verhinderung einer Kurzschlußbildung die Längsfäden auch mit einem temperaturbeständigen und gasdurchlässigen Material ummantelt werden. Ebenso kann ein Geflecht aus Querfäden 27 und jeweils wechselweise von der Ab- und der Anströmseite ausgehenden, bis jeweils maximal an den vorletzten Querfaden reichende Längsfadenschlaufen 28 verwendet werden (s. Fig. 4). Die Längsfadenschlaufen müssen nicht unbedingt bis jeweils an den vorletzten Querfaden hinreichen, sie können auch kürzer sein.

Eine zusätzliche Oberflächenvergrößerung und damit eine weitere Verbesserung des Abgasübertrittes in den porösen Keramikwerkstoff kann dadurch erzielt werden, wenn die Längs- und gegebenenfalls die Querfäden gewellt sind. In weiterer Ausgestaltung der Erfindung ist es auch denkbar, die Längs- und gegebenenfalls die Querfäden mit einer unterschiedlichen Fadenstärke auszubilden. So zeigt Figur 5 eine Abgasleitung 29 mit einem erfindungsgemäß hergestellten Rußfilterkörper 30, dessen zu der stromaufliegenden Seite 31 hin offene Kanäle 38 (Abgasströmungsrichtung: Pfeil 33) einen größeren Querschnitt aufweisen als die zur stromabliegenden Seite 34 hin offenen Kanäle 35. Durch diese Maßnahme wird ebenfalls die Rußpartikelspeicherkapazität erhöht.

Für die in der Zeichnung gezeigten Ausführungsbeispiele gilt, daß der Abstand der einzelnen Fäden zueinander in Bezug auf die Gesamtabmessungen des Rußfilterkörpers in der Zeichnung der Übersichtlichkeit wegen relativ groß gewählt wurde, in Wirklichkeit natürlich bedeutend geringer ist.

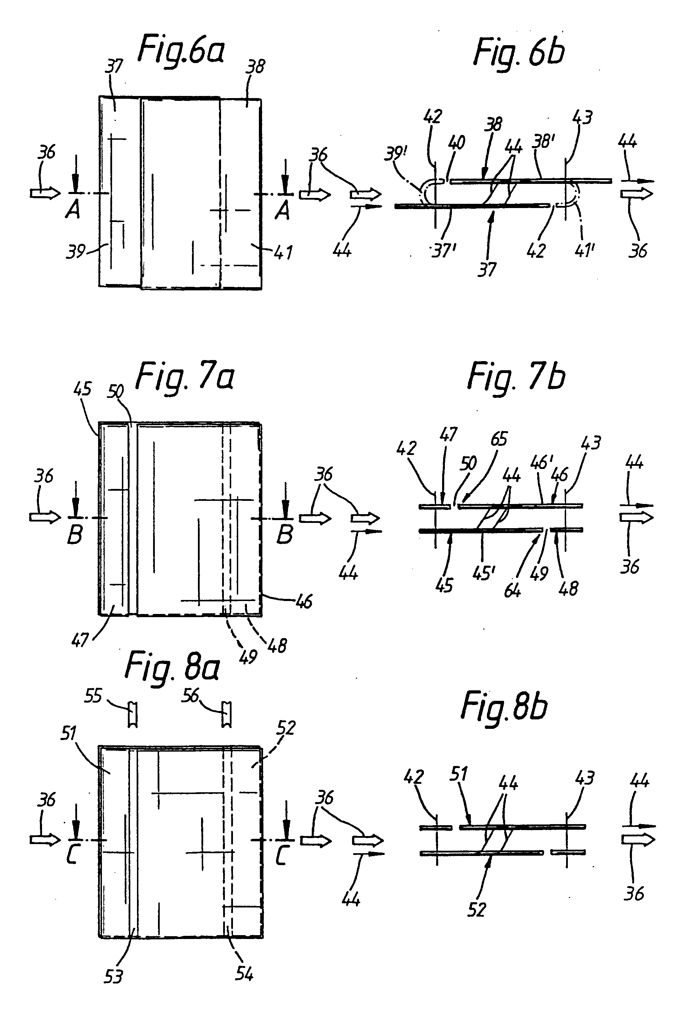

Bei der Herstellung des Rußfilterkörpers nach der Fig. 3 kommt es aufgrund dessen, daß die einzelnen Gewebelagen in Abgasströmungsrichtung versetzt zueinander angeordnet sind, in den Versatzbereichen, - also bezüglich der Abgasströmungsrichtung am stromauf- und an stromabwärtigen Ende des Rußfilterkörpers- , nach dem Aufwickeln und Brennen zu geringfügigen Verringerungen des Durchmessers, d. h.,der Durchmesser des Rußfilterkörpers ist in diesen Bereichen nach dessen Herstellung etwas kleiner als im Mittelbereich, in welchem vor dem Wickelvorgang zwei Gewebelagen übereinander liegen. Das gleiche gilt natürlich auch für einen geschichteten Rußfilterkörper, bei welchem in den Randbereichen durch den Versatz der einzelnen Gewebelagen nach dem Schichten und Brennen entsprechend geringere Schichthöhen als im Mittelbereich gegeben sind. Die mit den Figuren 6 bis 8 aufgezeigten Herstellungsvarianten ermöglichen die Herstellung eines vollkommen zylindrischen Rußfilterkörpes bzw. eines Rußfilterkörpers mit konstanter Schichthöhe.

Figur 6a zeigt in einer Draufsicht zwei in Abgasströmungsrichtung (Pfeile 36) versetzt übereinander liegende, bereits mit Schlicker bestrichene Gewebelagen 37 und 38, wie sie bei der Herstellung eines zu wickelnden Rußfilterkörpers (s. Fig. 3) verwendet werden. Der Einfachheit halber wurde in den Figuren 6a, 7a und 8a bei der Darstellung der Gewebelangen auf die genaue Darstellung der einzelnen Längs- und Querfäden verzichtet. Fig. 6b zeigt eine Schnittdarstellung der Fig. 6a längs der Linie A--A. Der Schnitt wurde so gelegt, daß genau zwei versetzt übereinanderliegende Längsfäden $37'$ und $38'$ sichtbar sind. Es ist nun vorgesehen, das stromaufwärtig überstehende Ende 39 der unteren Gewebelage 37 derart in Richtung der oberen, also der stromabwärtig überstehenden Gewebelage 38, umzulegen, daß dieses Ende 39 in einer Ebene mit der stromabwärtig überstehenden Gewebelage 38 liegt und zu dieser einen Abstand 40, welcher mit der schlickerförmigen keramischen Ausgangsmasse ausgefüllt ist, aufweist. Das Umlegen des Endes 39 der Gewebelage 37 ist in der Fig. 6b durch das strichpunktiert dargestellte Ende $39'$ des Längsfadens $37'$ dargestellt. Analog hierzu wird das stromabwärtig überstehende Ende 41 der oberen Gewebelage 38 derart in Richtung der stromaufwärtig überstehenden, also der unteren Gewebelage 37 umgelegt, daß dieses Ende 41 in einer Ebene mit der stromaufwärtig überstehenden Gewebelage 37 liegt und zu dieser einen Abstand 42, welcher ebenfalls mit der schlickerförmigen keramischen Ausgangsmasse ausgefüllt ist, aufweist. Das Umlegen des Endes 41 der Gewebelage 38 ist in der Fig. 6b durch das strichpunktiert dargestellte Ende $41'$ des Längsfadens $38'$ dargestellt. In der Darstellung der Fig. 6a sind die beiden Enden 39 und 41 noch nicht umgelegt. Im Anschluß an das Umlegen der beiden Enden 39 und 41 erfolgt, wie auch in Figur 3, die Herstellung des Rußfilterkörpers durch Aufwickeln und anschließendes Ausbrennen der Gewebelagen 37 und 38. Wie bei der Herstellung nach der Figur 3 werden aus demselben Grund auch hier nach dem Ausbrennen der Gewebelagen auf den beiden Stirnseiten des Rußfilterkörpers zwei schmale Scheiben abgesägt (Linien 42 und 43).

Es ist nun ein Rußfilterkörper entstanden, in welchen der Abgasstrom mit seinen Rußpartikeln über die Längsfäden $37'$ (s.Fig. 6b) eintritt, jedoch sind diese Längsfäden $37'$ durch den mit dem Schlicker ausgefüllten Abstand 42 auf der stromabwärtigen Seite für die Rußpartikel verschlossen, sodaß letztere in den Längsfäden $37'$ zurückgehalten werden und der gereinigte Abgasstrom schließlich durch den zwischen den Gewebelagen 37 und 38 vorhandenen porösen Keramikwerkstoff (Schlicker nach Brennen) in die oberen Längsfäden $38'$ strömt, (Pfeile 44). Diese oberen Längsfäden $38'$ sind zur stromabwärtigen Seite hin geöffnet. Daß die Rußpartikel über die oberen Längsfäden $38'$ den Rußfilterkörper ungereinigt durchströmen können, wird durch den mit Schlicker ausgefüllten Abstand 40 verhindert.

Damit liegen vor dem Wickelvorgang nicht nur im Mittelbereich, sondern auch an den beiden Enden 39 und 41 zwei Gewebelagen übereinander, sodaß nach dem Wickel- und Brennvorgang ein Rußfilterkörper mit konstantem Durchmesser über seine gesamte Länge gegeben ist.

Analog hierzu ist mit diesem Verfahren ein geschichteter Rußfilterkörper mit konstanter Schichthöhe herstellbar. In diesem Fall werden die beiden Enden immer nach dem Aufeinanderlegen zweier bestrichener Gewebelagen umgelegt.

Eine weitere Möglichkeit einen gewickelten Rußfilterkörper konstanten Durchmessers über dessen gesamte Länge bzw. einen geschichteten Rußfilterkörper mit konstanter Schichthöhe zu erhalten, ist in den Figuren 7a und 7b aufgezeigt. Fig. 7a zeigt wiederum zwei übereinander liegende, bereits mit der schlickerförmigen keramischen Ausgangsmasse bestrichene Gewebelagen 45 und 46, wie sie bei dem Herstellungsverfahren nach der Fig. 3 verwendet werden. Auch bei diesem Ausführungsbeispiel stellt die zweite Figur (Fig. 7b ) eine Schnittdarstellung der ersten (Fig. 7a) und zwar längs der Linie B--B dar. Der Schnitt verläuft ebenfalls in Höhe zweier versetzt übereinander liegender Längsfäden $45'$ und $46'$. Erfindungsgemäß ist nun vorgesehen, daß zwei ebenfalls mit der Schlickermasse bestrichene Zusatzgewebelagen 47 und 48 mit aufgewickelt werden, von denen die eine 48 mit einem Abstand 49 an dem von der benachbarten Gewebelage 46 überlappten Ende 64 und die andere 47 mit einem Abstand 50 an dem von der benachbarten Gewebelage 45 überlappten Ende 65 angesetzt ist. Die beiden Abstände 49 und 50 sind wiederum mit der Schlickermasse ausgefüllt. Die Zusatzgewebelage 48 schließt bündig mit der Gewebelage 46 und die Zusatzgewebelage 47 bündig mit der Gewebelage 45 ab. Der Versatz der beiden Gewebelagen 45 und 46 ist in diesem Ausführungsbeispiel an beiden Enden gleich groß. Es ist selbstverständlich auch möglich, diesen Versatz an den beiden Enden unterschiedlich zu wählen. Die Breite der Zusatzgewebelagen ist dann entsprechend anzupassen.

Nach dem Wickelvorgang und nach dem Ausbrennen sämtlicher Gewebelagen 45, 46, 47 und 48 ist wieder ein Rußfilterkörper gegeben, bei welchem die gleichen Verhältnisse wie bei dem nach den Figuren 6a und 6b hergestellten. Auch hier wird durch die Schlickermasse bzw. durch den nach dem Ausbrennvorgang aus der Schlickermasse entstandenen porösen Keramikwerkstoff, welcher die jeweilige Zusatzgewebelage 48 bzw. 47 von der zugehörigen Gewebelage 45 bzw. 46 trennt, ein Ausfiltern der im Abgasstrom enthaltenen Rußpartikel gewährleistet (Pfeile 44). Gleichzeitig liegt wiederum ein Rußfilterkörper mit konstantem Durchmesser über seine gesamte Länge vor.

Um einen geschichteten Rußfilterkörper mit konstanter Schichthöhe realisieren zu können, müssen eben vor dem Brennen mehrere Lagen, wie sie in den Figuren 7a und 7b dargestellt sind, aufeinander geschichtet werden.

Eine dritte Variante zur Herstellung eines gewickelten Rußfilterkörpers mit konstantem Durchmesser über seine gesamte Länge ist mit den beiden Figuren 8a und 8b aufgezeigt (Fig. 8b ist wiederum eine Schnittdarstellung der Fig. 8a längs der Linie C--C).

Hierbei ist vorgesehen, zunächst zwei Gewebelagen 51 und 52 ohne Versatz übereinander zu führen und aus jeder dieser beiden Gewebelagen 51 bzw. 52 jeweils senkrecht zu Abgasströmungsrichtung (Pfeile 36) je einen Gewebestreifen 53 bzw. 54 zu entfernen, von denen der eine 53 im Bereich des stromaufwärtigen Endes der oberen Gewebelage 51 und der andere 54 im Bereich des stromabwärtigen Endes der unteren Gewebelage 52 entfernt wird. Die Gewebestreifen 53 und 54 können z.B. mit je einem geeigneten Messer 55 bzw. 56 herausgeschnitten werden. Anschließend werden sämtliche Gewebelagen mit der Schlickermasse bestrichen und aufgewickelt. Die Gewebelagen können auch schon vor dem Entfernen der Gewebestreifen mit der Schlickermasse bestrichen werden. In diesem Fall muß nur beachtet werden, daß die durch das Entfernen entstehenden Abstände nachträglich noch mit Schlickermasse auszufüllen sind. Nach dem Ausbrennen der Gewebelagen liegen die gleichen Verhälnisse vor wie bei dem nach den Fig. 7a und 7b hergestellten Rußfilterkörper.

Auch dieses Verfahren läßt sich zur Herstellung eines geschichteten Rußfilterkörpers verwenden. So wird hier aus jeder zu schichtenden Gewebelage ebenfalls immer ein Gewebestreifen entfernt, wobei der Gewebestreifen immer abwechselnd bei der einen Gewebelage im Bereich des stromaufwärtigen Endes und bei der benachbarten Gewebelage im Bereich des stromabwärtigen Endes entfernt wird.

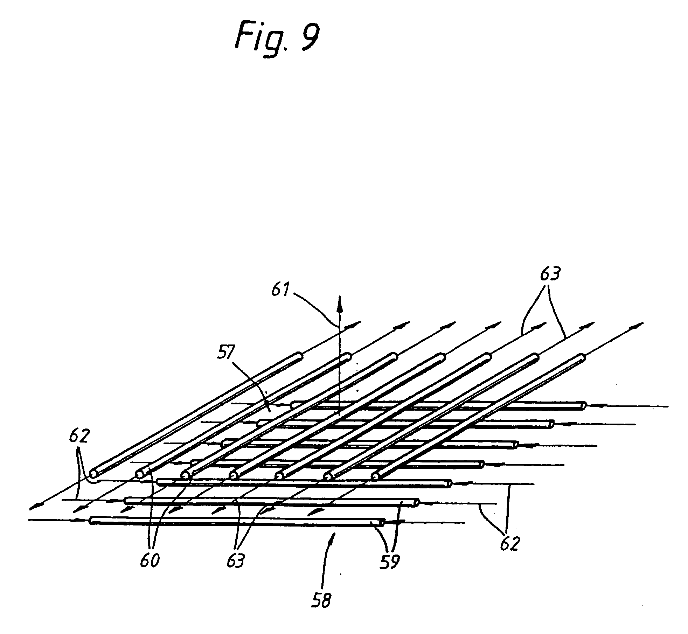

Fig. 9 zeigt ein weiteres Verfahren zur Herstellung eines geschichteten Rußfilterkörpers. Hierbei werden einzelne bestrichene Gewebelagen, welche aus ausbrennbaren Längsfäden und aus diese auf Abstand haltenden, nichtausbrennbaren Querfäden bestehen, aufeinander geschichtet. Der Übersichtlichkeit wegen sind in der Figur 9 nur zwei Gewebelagen 57 und 58 aufgezeigt und hiervon auch nur die Längsfäden 59 und 60. Dieses Herstellungsverfahren sieht nun vor, die einzelnen Lagen von bestrichenem Gewebe um 90° bezüglich der Schichtrichtung 61 verdreht zueinander zu schichten. Damit besteht die Möglichkeit, den Abgasstrom um 90° umzulenken.

Bleiben die durch das Ausbrennen der Längsfäden 59 und 60 gebildeten Ein- und Austrittskanäle ( Längsfäden 59 bilden die Eintrittskanäle ; Längsfäden 60 bilden die Austrittskanäle) beidseitig geöffnet, so kann der Rußfilterkörper zweiflutig angeströmt (Pfeile 62) werden und ebenso strömt das Abgas wieder zweiflutig ab (Pfeile 63).

Durch wahlweises Verschließen einer Seite der Ein- oder der Austrittskanäle oder der Ein- und der Austrittskanäle kann auch wieder Einflutigkeit beim Ein- oder Austritt oder beim Ein- und Austritt hergestellt werden.

## Patentansprüche

1. Verfahren zur Herstellung eines Rußpartikelfilters aus einem porösen Keramikwerkstoff mit zur Anströmseite des Abgases hin offenen Eintrittskanälen und davon beabstandet zur Abströmseite hin offenen Austrittskanälen durch Schichten oder Wickeln von keramischem Werkstoff,
   **dadurch gekennzeichnet,**
   daß eine schlickerförmige, zu einem porösen Werkstoff brennbare keramische Ausgangsmasse (12) auf ein Gewebe mit zumindest in Filterlängsrichtung (13) verlaufenden und zueinander versetzt angeordneten Längsfäden (3', 4') aufgebracht wird,
   daß anschließend durch Schichten oder Wickeln des bestrichenen Gewebes der Rußfilterkörper (2) gebildet wird und daß danach durch keramisches Brennen des Rußfilterkörpers (2) die Ein- und Austrittskanäle durch Ausbrennen der Längsfäden (3', 4') erzeugt werden.

2. Verfahren zur Herstellung eines Rußpartikelfilters aus einem porösen Keramikwerkstoff mit zur Anströmseite des Abgases hin offenen Eintrittskanälen und davon beabstandet zur Abströmseite hin offenen Austrittskanälen durch Schichten oder Wickeln von keramischem Werkstoff,
**dadurch gekennzeichnet,**
daß in Abgasströmungsrichtung (22) versetzt zueinander mindestens zwei Lagen von mit einer schlickerförmigen, zu einem porösen Werkstoff brennbaren keramischen Ausgangsmasse (21) bestrichenem Gewebe (15, 16) aufeinander gelegt und anschließend zu einem Rußfilterkörper (14) aufgewickelt oder daß in Abgasströmungsrichtung (22) versetzt zueinander mehrere Lagen von bestrichenem Gewebe geschichtet werden und daß danach durch keramisches Brennen des Rußfilterkörpers (14) die Ein- und Austrittskanäle durch Ausbrennen der Längsfäden (17, 18) oder der Gewebelagen (15,16) erzeugt werden.

3. Verfahren nach Anspruch 2,
**dadurch gekennzeichnet,**
daß zur Herstellung eines gewickelten Rußfilterkörpers vor dem Wickelvorgang jeweils das stromaufwärtig überstehende Ende (39) einer Gewebelage (37) derart in Richtung einer stromabwärtig überstehenden Gewebelage (38) umgelegt wird, daß dieses Ende (39) in einer Ebene mit der stromabwärtig überstehenden Gewebelage (38) liegt und zu dieser einen Abstand (40) aufweist und daß ebenfalls vor dem Wickelvorgang jeweils das stromabwärtig überstehende Ende (41) der Gewebelage (38) derart in Richtung der stromaufwärtig überstehenden Gewebelage (37) umgelegt wird, daß dieses Ende (41) in einer Ebene mit der stromaufwärtig überstehenden Gewebelage (37) liegt und zu dieser einen Abstand (42) aufweist.

4. Verfahren nach Anspruch 2,
**dadurch gekennzeichnet,**
daß zur Herstellung eines geschichteten Rußfilterkörpers jeweils immer nach dem Aufeinanderlegen zweier Gewebelagen das stromaufwärtig überstehende Ende einer Gewebelage derart in Richtung einer stromabwärtig überstehenden Gewebelage umgelegt wird, daß dieses Ende in einer Ebene mit der stromabwärtig überstehenden Gewebelage liegt und zu dieser einen Abstand aufweist und
daß ebenfalls nach dem Aufeinanderlegen zweier Gewebelagen das stromabwärtig überstehende Ende der Gewebelage derart in Richtung der stromaufwärtig überstehenden Gewebelage umgelegt wird, daß dieses Ende in einer Ebene mit der stromaufwärtig überstehenden Gewebelage liegt und zu dieser einen Abstand aufweist.

5. Verfahren nach Anspruch 2,

**dadurch gekennzeichnet,**
daß zur Herstellung eines gewickelten Rußfilterkörpers jeweils an das von einer benachbarten Gewebelage (46 bzw. 45) überlappte Ende (64 bzw. 65) unter Einschluß eines Abstandes (49 bzw. 50) eine mit dem überstehenden Ende einer benachbarten Gewebelage (46 bzw. 45) weitgehend bündig abschließende und mit schlickerförmiger keramischer Ausgangsmasse bestrichene Zusatzgewebelage (48 bzw. 47) angesetzt und mit den Gewebelagen aufgewickelt wird.

6. Verfahren nach Anspruch 2,
**dadurch gekennzeichnet,**
daß zur Herstellung eines geschichteten Rußfilterkörpers jeweils an das von einer benachbarten Gewebelage überlappte Ende unter Einschluß eines Abstandes eine mit dem überstehenden Ende einer benachbarten Gewebelage weitgehend bündig abschließende und mit schlickerförmiger keramischer Ausgangsmasse bestrichene Zusatzgewebelage angesetzt und mit den Gewebelagen mit geschichtet wird.

7. Verfahren nach Anspruch 2,
**dadurch gekennzeichnet,**
daß zur Herstellung eines gewickelten Rußfilterkörpers zunächst aus jeder von mindestens zwei, ohne Versatz übereinander geführten Gewebelagen (51 und 52) jeweils senkrecht zur Abgasströmungsrichtung (36) ein Gewebestreifen (53 bzw. 54) entfernt wird, wobei ein Gewebestreifen (53) im Bereich des stromaufwärtigen Endes der einen Gewebelage (51) und der andere Gewebestreifen (54) im Bereich des stromabwärtigen Endes der anderen Gewebelage (52) entfernt wird und daß anschließend sämtliche Gewebelagen mit der schlickerförmigen keramischen Ausgangsmasse bestrichen und zu einem Rußfilterkörper aufgewickelt werden.

8. Verfahren nach Anspruch 2,
**dadurch gekennzeichnet,**
daß zur Herstellung eines geschichteten Rußfilterkörpers zunächst aus jeder der zu schichtenden Gewebelagen jeweils ein senkrecht zur Abgasströmungsrichtung verlaufender Gewebestreifen entfernt wird, wobei immer ein Gewebestreifen an dem stromaufwärtigen Ende der einen Gewebelage und der Gewebestreifen der dazu benachbarten Gewebelage an deren stromabwärtigem Ende entfernt wird und daß anschließend sämtliche Gewebelagen mit der schlickerförmigen keramischen Ausgangsmasse bestrichen und zu einem Rußfilterkörper geschichtet werden.

9. Verfahren zur Herstellung eines Rußpartikelfilters aus einem porösen Keramikwerkstoff mit zur Anströmseite des Abgases hin offenen Eintrittskanälen und davon beabstandet zur Abströmseite hin offenen Austrittskanälen durch Schichten oder Wickeln von keramischem Werkstoff, **dadurch gekennzeichnet,** daß einzelne Lagen (57 und 58) von mit einer schlickerförmigen, zu einem porösen Werkstoff brennbaren keramischen Ausgangsmasse bestrichenem Gewebe um 90° bezüglich der Schichtrichtung (61) verdreht zueinander geschichtet werden und daß danach durch keramisches Brennen des Rußfilterkörpers die Ein- und Austrittskanäle durch Ausbrennen der einzelnen Längsfäden (59,60) erzeugt werden.

10. Verfahren nach einem der Ansprüche 1 bis 8, **dadurch gekennzeichnet,** daß das Gewebe durch ein Geflecht aus den Längsfäden (3', 4') und quer dazu verlaufenden, die Längsfäden (3', 4') auf Abstand haltenden Querfäden (11) gebildet ist, wobei die Längsfäden (3', 4') aus einem Material bestehen, dessen Abbrenntemperatur gleich oder unterhalb der Brenntemperatur des Rußfilterkörpers (2) liegt und daß die Querfäden (11) aus einem Material bestehen, dessen Abbrenntemperatur oberhalb dieser Brenntemperatur liegt.

11. Verfahren nach einem der Ansprüche 2 bis 8, **dadurch gekennzeichnet,** daß das Gewebe durch ein Geflecht (15, 16) aus den Längsfäden (17, 18) und quer dazu verlaufenden, die Längsfäden (17, 18) auf Abstand haltenden Querfäden (19, 20) gebildet ist, wobei die Längs- (17, 18) und die Querfäden (19, 20) aus einem Material bestehen, dessen Abbrenntemperatur gleich oder unterhalb der Brenntemperatur des Rußfilterkörpers (14) liegt.

12. Verfahren nach einem der Ansprüche 1 bis 9, **gekennzeichnet durch** eine während des Schichtvorganges sich auflösende Folie, auf welche die Längsfäden aufgebracht sind.

13. Verfahren nach einem der Ansprüche 1 bis 9, **dadurch gekennzeichnet,** daß jeder der Längsfäden von einem als Abstandshalter dienenden gasdurchlässigen Material ummantelt ist, dessen Abbrenntemperatur oberhalb der Brenntemperatur des Rußfilterkörpers liegt.

14. Verfahren nach einem der Ansprüche 1 bis 9, **dadurch gekennzeichnet,** daß das Gewebe durch ein Geflecht aus Querfäden (27) und jeweils wechselweise von der Ab- und der Anströmseite ausgehenden, bis maximal an den vorletzten Querfaden reichende Längsfadenschlaufen (28) gebildet ist.

15. Verfahren nach einem der Ansprüche 10 bis 14, **dadurch gekennzeichnet,** daß das Gewebe leicht gewellt ist.

16. Verfahren nach einem der Ansprüche 10 bis 15, **dadurch gekennzeichnet,** daß die Längsfäden (3', 4', 17, 18) aus organischen Fasern oder aus Chemiefasern bestehen.

17. Verfahren nach einem der Ansprüche 10 bis 16, **dadurch gekennzeichnet,** daß die Längsfäden (3', 4', 17, 18) und gegebenenfalls die Querfäden (11, 19, 20) eine aufgerauhte Oberfläche aufweisen.

18. Verfahren nach einem der Ansprüche 10 bis 17, **dadurch gekennzeichnet,** daß die Längsfäden (3', 4', 17, 18) katalytisch beschichtet sind.

19. Verfahren nach einem der Ansprüche 10 bis 18, **dadurch gekennzeichnet,** daß der Querschnitt der zur stromaufliegenden Seite (31) hin offenen Kanäle (32) größer ist als der Querschnitt der zur stromabliegenden Seite (34) hin offenen Kanäle (35).

20. Verfahren nach einem der Ansprüche 2 bis 8, **dadurch gekennzeichnet,** daß das Gewebe ein Vlies ist.

21. Verfahren nach Anspruch 20, **dadurch gekennzeichnet,** daß das Vlies gelocht ist.

**Claims**

1. Process for manufacturing a carbon particle filter from a porous ceramic material, with entry channels which are open toward the exhaust gas inlet side and, spaced apart therefrom, exit channels which are open toward the outlet side, by layering or rolling ceramic material, characterised in that a slip-like ceramic starting material (12) which can be fired to give a porous material is applied to a fabric having longitudinal threads (3', 4') extending at least in the longitudinal direction of the filter (13) and offset relative to one another, then the carbon filter body (2) is formed by layering or winding the coated fabric, and then by ceramic firing of the carbon filter body (2) the entry and exit channels are produced by burning away the longitudinal threads (3', 4').

2. Process for manufacturing a carbon particle filter from a porous ceramic material, with entry channels which are open toward the exhaust gas inlet side and, spaced apart therefrom, exit channels which are open toward the outlet side, by layering or rolling ceramic material, characterised in that at least two layers of fabric (15, 16) coated with a slip-like ceramic starting material (21) which can be fired to give a porous material are placed on top of one another offset in the exhaust gas flow direction (22) and then rolled up to form a carbon filter body (14) or a plurality of layers of coated fabric are layered offset in the exhaust gas flow direction (22) relative to one another, and then by ceramic firing of the carbon filter body (14) the entry and exit channels are produced by burning away the longitudinal threads (17, 18) or the fabric layers (15, 16).

3. Process according to Claim 2, characterised in that to manufacture a rolled carbon filter body whichever is the upstream-protruding end (39) of a fabric layer (37) is, prior to the rolling operation, folded over in the direction of a downstream-protruding fabric layer (38) in such a way that this end (39) comes to lie in a plane with the downstream-protruding fabric layer (38) and is at a distance (40) therefrom and in that, likewise prior to the rolling operation, whichever is the downstream-protruding end (41) of the fabric layer (38) is folded over in the direction of the upstream-protruding fabric layer (37) in such a way that this end (41) comes to lie in a plane with the upstream-protruding fabric layer (37) and is at a distance (42) therefrom.

4. Process according to Claim 2, characterised in that to manufacture a layered carbon filter body whenever two fabric layers have been placed one on top of the other the upstream-protruding end of a fabric layer is folded over in the direction of a downstream-protruding fabric layer in such a way that this end comes to lie in a plane with the downstream-protruding fabric layer and is at a distance therefrom and in that, again whenever two fabric layers have been placed one on top of the other, the downstream-protruding end of the fabric layer is folded over in the direction of the upstream-protruding fabric layer in such a way that this end comes to lie in a plane with the upstream-protruding fabric layer and is at a distance therefrom.

5. Process according to Claim 2, characterised in that to manufacture a rolled carbon filter body there is placed against each end (64 or 65) overlapped by an adjacent fabric layer (46 or 45), at a distance therefrom (49 or 50), an additional fabric layer (48 or 47) which is substantially flush with the protruding end of an adjacent fabric layer (46 or 45) and has been coated with slip-like ceramic starting material and is rolled up with the fabric layers.

6. Process according to Claim 2, characterised in that to manufacture a layered carbon filter body there is placed against each end overlapped by an adjacent fabric layer, at a distance therefrom, an additional fabric layer which is substantially flush with the protruding end of an adjacent fabric layer and has been coated with slip-like ceramic starting material and is layered together with the fabric layers.

7. Process according to Claim 2, characterised in that to manufacture a rolled carbon filter body first of all from each of at least two fabric layers (51 and 52) guided one on top of the other without offset there is removed, in each case perpendicularly to the exhaust gas flow direction (36), a fabric strip (53 or 54), one fabric strip (53) being removed in the region of the upstream end of one of the fabric layers (51) and the other fabric strip (54) being removed in the region of the downstream end of the other fabric layer (52), and in that subsequently all the fabric layers are coated with the slip-like ceramic starting material and rolled up to form a carbon filter body.

8. Process according to Claim 2, characterised in that to manufacture a layered carbon filter body first of all from each of the fabric layers to be layered there is removed a fabric strip which extends perpendicularly to the exhaust gas flow direction, in every case a fabric strip being removed at the upstream end of one of the fabric layers and the fabric strip of the fabric layer adjacent thereto being removed at the downstream end thereof, and in that subsequently all the fabric layers are coated with the slip-like ceramic starting material and layered to form a carbon filter body.

9.   Process for manufacturing a carbon particle filter from a porous ceramic material, with entry channels which are open toward the exhaust gas inlet side and, spaced apart therefrom, exit channels which are open toward the outlet side, by layering or rolling ceramic material, characterised in that individual layers (57 and 58) of fabric coated with a slip-like ceramic starting material which can be fired to give a porous material are layered twisted with respect to one another by 90° relative to the layering direction (61), and then by ceramic firing of the carbon filter body the entry and exit channels are produced by burning away the individual longitudinal threads (59, 60).

10.  Process according to any one of Claims 1 to 8, characterised in that the fabric comprises a mesh of longitudinal threads (3', 4') and transverse threads (11) which extend transversely thereto and keep the longitudinal threads (3', 4') spaced apart, the longitudinal threads (3', 4') consisting of a material whose burn-off temperature is equal to or below the firing temperature of the carbon filter body (2), and in that the transverse threads (11) consist of a material whose burn-off temperature is above this firing temperature.

11.  Process according to any one of Claims 2 to 8, characterised in that the fabric comprises a mesh (15, 16) of the longitudinal threads (17, 18) and transverse threads (19, 20) which extend transversely thereto and keep the longitudinal threads (17, 18) spaced apart, the longitudinal (17, 18) and transverse threads (19, 20) consisting of a material whose burn-off temperature is equal to or below the firing temperature of the carbon filter body (14).

12.  Process according to any one of Claims 1 to 9, characterised by a film to which the longitudinal threads have been applied and which dissolves during the process of layering.

13.  Process according to any one of Claims 1 to 9, characterised in that each of the longitudinal threads has been sheathed with a gas-permeable material which acts as a spacer and the burn-off temperature of which is above the firing temperature of the carbon filter body.

14.  Process according to any one of Claims 1 to 9, characterised in that the fabric comprises a mesh of transverse threads (27) and longitudinal thread loops (28) extending alternately from the inlet and the outlet side and reaching up to at most the penultimate transverse thread.

15.  Process according to any one of Claims 10 to 14, characterised in that the fabric is slightly wavy.

16.  Process according to any one of Claims 10 to 15, characterised in that the longitudinal threads (3', 4', 17, 18) consist of organic fibres or of man-made fibres.

17.  Process according to any one of Claims 10 to 16, characterised in that the longitudinal threads (3', 4', 17, 18) and optionally the transverse threads (11, 19, 20) have a roughened surface.

18.  Process according to any one of Claims 10 to 17, characterised in that the longitudinal threads (3', 4', 17, 18) have a catalytic coating.

19.  Process according to any one of Claims 10 to 18, characterised in that the cross-section of the channels (32) open toward the upstream side (31) is greater than the cross-section of the channels (35) open toward the downstream side (34).

20.  Process according to any one of Claims 2 to 8, characterised in that the fabric is a fleece.

21.  Process according to Claim 20, characterised in that the fleece is perforated.

**Revendications**

1.   Procédé pour la fabrication, en un matériau céramique poreux, d'un filtre à particules de suie comportant des canaux d'entrée ouverts vers le côté de l'écoulement arrivant du gaz d'échappement et, à distance de ceux-ci, des canaux de sortie ouverts vers le côté effluent, par empilage de couches ou enroulement de matériau céramique, caractérisé en ce que l'on applique sur un tissu, possédant au moins des fils longitudinaux (3', 4') s'étendant dans la direction longitudinale du filtre (13) et mutuellement décalés dans cette direction, une masse céramique initiale (12) en forme de barbotine, transformable par cuisson en un matériau poreux, on forme ensuite le corps (2) du filtre à suie par empilage de couches ou enroulement du tissu enduit et on crée après cela les canaux d'entrée et de sortie par cuisson céramique du corps (2) du filtre à suie par l'élimination par brûlure des fils longitudinaux (3', 4').

2. Procédé pour la fabrication, en un matériau céramique poreux, d'un filtre à particules de suie comportant des canaux d'entrée ouverts vers le côté de l'écoulement arrivant du gaz d'échappement et, à distance de ceux-ci, des canaux de sortie ouverts vers le côté effluent, par empilage de couches ou enroulement de matériau céramique, caractérisé en ce que l'on place l'une sur l'autre, avec un décalage mutuel dans la direction d'écoulement (22) du gaz d'échappement, au moins deux couches (15, 16) de tissu enduit d'une masse céramique initiale (21), transformable par cuisson en un matériau poreux, couches que l'on enroule ensuite en un corps de filtre à suie (14), ou que l'on empile, avec un décalage mutuel dans la direction d'écoulement (22) du gaz d'échappement, plusieurs couches de tissu enduit, et que l'on crée après cela les canaux d'entrée et de sortie par cuisson céramique du corps de filtre à suie (14) par élimination par brûlure des fils longitudinaux (17, 18) ou des couches de tissu (15, 16).

3. Procédé selon la revendication 2, caractérisé en ce que, pour la fabrication d'un corps de filtre à suie enroulé, on rabat chaque fois, avant l'opération d'enroulement, l'extrémité, dépassant vers l'amont (39), d'une couche de tissu (37), en direction d'une couche de tissu (38) dépassant vers l'aval, de manière que cette extrémité (39) se trouve dans le même plan que la couche de tissu (38) dépassant vers l'aval et présente une distance (40) par rapport à celle-ci, et que, également avant l'opération d'enroulement, on rabat chaque fois l'extrémité (41), dépassant vers l'aval, d'une couche de tissu (38) en direction de la couche de tissu (37) dépassant vers l'amont, de manière que cette extrémité (41) se trouve dans le même plan que la couche de tissu (37) dépassant vers l'amont et présente une distance (42) par rapport à elle.

4. Procédé selon la revendication 2, caractérisé en ce que, pour la fabrication d'un corps de filtre à suie à empilage de couches, on rabat toujours, après chaque superposition de deux couches de tissu, l'extrémité, dépassant vers l'amont, d'une couche de tissu, en direction d'une couche de tissu dépassant vers l'aval, de manière que cette extrémité se trouve dans le même plan que la couche de tissu dépassant vers l'aval et présente une distance par rapport à celle-ci, et que, également après la superposition de deux couches de tissu, on rabat l'extrémité, dépassant vers l'aval, d'une couche de tissu en direction de la couche de tissu dépassant vers l'amont, de manière que cette extrémité se trouve dans le même plan que la couche de tissu dépassant vers l'amont et présente une distance par rapport à elle.

5. Procédé selon la revendication 2, caractérisé en ce que, pour la fabrication d'un corps de filtre à suie enroulé, on accole chaque fois une couche supplémentaire (48 ou 47) de tissu, enduit de masse céramique initiale en forme de barbotine, à l'extrémité de couche (64 ou 65) couverte par une couche de tissu (46 ou 45) voisine, en ménageant une distance (49 ou 50) entre elles, la couche supplémentaire (48 ou 47) se terminant sensiblement à fleur de l'extrémité dépassant d'une couche de tissu (46 ou 45) voisine, et on enroule la couche supplémentaire (48 ou 47) ensemble avec les couches de tissu.

6. Procédé selon la revendication 2, caractérisé en ce que, pour la fabrication d'un corps de filtre à suie à empilage de couches, on accole chaque fois une couche supplémentaire de tissu, enduit de masse céramique initiale en forme de barbotine, à l'extrémité de couche couverte par une couche de tissu voisine, en ménageant une distance entre elles, la couche supplémentaire se terminant sensiblement à fleur de l'extrémité dépassante d'une couche de tissu voisine, et on empile la couche supplémentaire ensemble avec les couches de tissu.

7. Procédé selon la revendication 2, caractérisé en ce que, pour la fabrication d'un corps de filtre à suie enroulé, on enlève d'abord une bande de tissu (53 ou 54) orientée transversalement à la direction d'écoulement (36) du gaz d'échappement, de chacune d'au moins deux couches de tissu (51 et 52) guidées sans décalage l'une au-dessus de l'autre, une bande de tissu (53) étant enlevée dans la zone de l'extrémité amont de l'une (51) des couches de tissu et l'autre bande de tissu (54) étant enlevée dans la zone de l'extrémité aval de l'autre couche de tissu (52), et que, ensuite, on enduit toutes les couches de tissu de la masse céramique initiale en forme de barbotine et on les enroule en un corps de filtre à suie.

8. Procédé selon la revendication 2, caractérisé en ce que, pour la fabrication d'un corps de filtre à suie à empilage, on enlève d'abord une bande de tissu, orientée transversalement à la direction d'écoulement du gaz d'échappement, de chacune des couches de tissu à empiler, en enlovant toujours une bande de tissu sur l'extrémité amont de l'une des couches de tissu et en enlevant la bande de tissu de la couche de tissu voisine à l'extrémité aval de cette dernière, et que, ensuite, on enduit toutes les couches de tissu de la masse céramique initiale en forme de barbotine et on les empile en un corps de filtre à suie.

9. Procédé pour la fabrication, en un matériau céramique poreux, d'un filtre à particules de suie comportant des canaux d'entrée ouverts vers le côté de l'écoulement arrivant du gaz d'échappement et, à distance de ceux-ci, des canaux de sortie ouverts vers le côté effluent, par empilage de couches ou enroulement de matériau céramique, caractérisé en ce que l'on empile des couches individuelles (57 et 58) d'un tissu enduit d'une masse céramique initiale en forme de barbotine, transformable par cuisson en un matériau poreux, avec une rotation mutuelle de 90° des différentes couches (57 et 58) par rapport à la direction d'empilage (61), et que l'on crée ensuite les canaux d'entrée et de sortie par cuisson céramique du corps de filtre à suie par l'élimination par brûlure des fils longitudinaux (59, 60) du tissu.

10. Procédé selon une des revendications 1 à 8, caractérisé en ce que le tissu est formé d'un treillis constitué des fils longitudinaux (3', 4') et de fils transversaux (11) s'étendant transversalement à eux et maintenant les fils longitudinaux (3', 4') à distance les uns des autres, les fils longitudinaux (3', 4') étant faits d'un matériau dont la température de brûlage est égale ou inférieure à la température de cuisson du corps (2) du filtre à suie, et que les fils transversaux (11) sont faits d'un matériau dont la température de brûlage est supérieure à cette température de cuisson.

11. Procédé selon une des revendications 2 à 8, caractérisé en ce que le tissu est formé d'un treillis (15, 16) constitué des fils longitudinaux (17, 18) et de fils transversaux (19, 20) s'étendant transversalement à eux et maintenant les fils longitudinaux (17, 18) à distance les uns des autres, les fils longitudinaux (17, 18) et les fils transversaux (19, 20) étant faits d'un matériau dont la température de brûlage est égale ou inférieure à la température de cuisson du corps (14) du filtre à suie.

12. Procédé selon une des revendications 1 à 9, caractérisé par une feuille sur laquelle sont appliqués les fils longitudinaux et qui se dissout pendant l'opération d'empilage.

13. Procédé selon une des revendications 1 à 9, caractérisé en ce que chacun des fils longitudinaux est gainé d'une matière perméable au gaz, servant d'élément d'écartement, dont la température de brûlage est supérieure à la température de cuisson du corps du filtre à suie.

14. Procédé selon une des revendications 1 à 9, caractérisé en ce que le tissu est formé d'un treillis constitué de fils transversaux (27) et de boucles de fils longitudinaux (28) partant alternativement du côté effluent et du côté de l'écoulement arrivant et s'étendant tout au plus jusqu'à l'avant-dernier fil transversal.

15. Procédé selon une des revendications 10 à 14, caractérisé en ce que le tissu est légèrement ondulé.

16. Procédé selon une des revendications 10 à 15, caractérisé en ce que les fils longitudinaux (3', 4', 17, 18) sont faits de fibres organiques ou de fibres chimiques.

17. Procédé selon une des revendications 10 à 16, caractérisé en ce que les fils longitudinaux (3', 4', 17, 18) et, éventuellement, les fils transversaux (11, 19, 20) présentent une surface rendue rugueuse.

18. Procédé selon une des revendictions 10 à 17, caractérisé en ce que les fils longitudinaux (3', 4', 17, 18) sont revêtus catalytiquement.

19. Procédé selon une des revendications 10 à 18, caractérisé en ce que la section droite des canaux (32) ouverts vers le côté amont (31) est plus grande que la section droite des canaux (35) ouverts vers le côté aval (34).

20. Procédé selon une des revendications 2 à 8, caractérisé en ce que le tissu est un voile.

21. Procédé selon la revendication 20, caractérisé en ce que le voile est perforé.

Fig. 1

Fig. 2

Fig.3

EP 0 330 161 B1

## Fig. 4

## Fig.5

# *Fig.6a*

# *Fig. 6b*

# *Fig. 7a*

# *Fig. 7b*

# *Fig. 8a*

# *Fig.8b*

# Fig. 9